# EUROPÄISCHE PATENTANMELDUNG

(11) **EP 0 901 304 A2**
(43) Veröffentlichungstag der Anmeldung: **10.03.1999**
(21) Anmeldenummer: 98250312.0
(22) Anmeldetag: 04.09.1998
(51) Int. Cl.: H04Q 11/04

(54) **ISDN-Telekommunikationsanlage und Teilnehmerendeinrichtung**

(30) Priorität: 04.09.1997 DE 19739701; 09.09.1997 DE 19739516
(71) Anmelder: ELMEG GmbH Kommunikationstechnik, D-31228 Peine (DE)
(72) Erfinder: Simon, Joachim, Dipl-Phys., 24247 Mielkendorf (DE)
(74) Vertreter: Christiansen, Henning, Dipl.-Ing.

(57) **Zusammenfassung**

ISDN-Telekommunikationsanlage (3) mit mindestens einer amtsseitigen So-Schnittstelle zum Anschluß an ein Netzabschlußgerät (1) oder mit mindestens einer amtsseitigen U-Schnittstelle zum direkten Anschluß an eine digitale Vermittlungsstelle (2) sowie mit einer teilnehmerseitigen So-Schnittstelle zur Bereitstellung eines internen So-Busses und zum Anschluß von ISDN-Endgeräten (4, 5) an den internen So-Bus, wobei der amtsseitigen So- bzw. U-Schnittstelle und der teilnehmerseitigen So-Schnittstelle ein erstes Koppelfeld zwischengeschaltet ist, das die auf einem B-Kanal des internen So-Busses teilnehmerseitig eintreffenden Bytes jeweils in mehrere Bitgruppen zerlegt, die jeweils entsprechend einem bitratenreduzierten Übertragungsstandard von einem digitalen Endgerät (11.1 bis 11.4) stammen und wobei der amtsseitigen So- bzw. U-Schnittstelle und dem ersten Koppelfeld ein Transcoder zwischengeschaltet ist, der amtsseitig einen ISDN-Übertragungsstandard und teilnehmerseitig den bitratenreduzierten Übertragungsstandard des digitalen Endgeräts (11.1 bis 11.4) unterstützt. Die Koppelfelder können sowohl räumlich getrennt wie auch im Zeitmultiplexbetrieb in HW oder SW implementiert sein.

## Beschreibung

Die Erfindung betrifft eine ISDN-Telekommunikationsanlage gemäß dem Oberbegriff des Anspruchs 1 sowie eine Teilnehmerendeinrichtung gemäß dem Oberbegriff des Anspruchs 10 zum Anschluß an eine derartige ISDN-Telekommunikationsanlage.

Bei dem bekannten ISDN-Basisanschluß ist in den Räumen des Benutzers in der Regel ein sogenanntes Netzabschlußgerät (NTBA - network terminator basic access) installiert, das amtsseitig eine U_{K0}-Schnittstelle aufweist und über eine herkömmliche 2-Draht-Leitung mit der zuständigen Ortsvermittlungsstelle (DIVO - Digitale Vermittlungsstelle Ortsnetz) verbunden ist. Teilnehmerseitig weist das Netzabschlußgerät dagegen eine So-Schnittstelle auf und ist über eine 4-Draht-Leitung parallel mit bis zu acht ISDN-Endgeräten verbunden, wobei die individuelle Adressierung der einzelnen ISDN-Endgeräte durch eine im Übertragungsprotokoll festgelegte MSN (multi subscriber number) erfolgt. Ein derartiger ISDN-Basisanschluß verfügt zur Datenübertragung über zwei B-Kanäle mit einer Übertragungskapazität von jeweils 64 kBit/s und weist zusätzlich einen D-Kanal mit einer Übertragungskapazität von 16 kBit/s auf, der zur Steuerung eines Protokolls für vermittlungstechnische Daten, vorzugsweise das standardisierte EDSS1, dient.

An einen derartigen ISDN-Basisanschluß können zwar physikalisch bis zu acht ISDN-Endgeräte angeschlossen werden, jedoch lassen sich nur zwei dieser ISDN-Endgeräte gleichzeitig betreiben, da jeder der beiden B-Kanäle nur den Aufbau einer einzigen Verbindung zum Netz ermöglicht.

Allgemein bekannt sind weiterhin ISDN-Telekommunikationsanlagen, die ihrerseits eine S₀-Schnittstelle aufweisen und mit dieser anstelle der einzelnen ISDN-Endgeräte an das Netzabschlußgerät angeschlossen werden. Teilnehmerseitig weisen die bekannten ISDN-Telekommunikationsanlagen ebenfalls So-Schnittstellen auf, die einen internen S₀-Bus bereitstellen, an den standardisierte ISDN-Endgeräte angeschlossen werden können. Zusätzlich weisen solche TK-Anlagen i.A. auch noch Anschlußmöglichkeiten für einen Betrieb herkömmlicher analoger Endgeräte auf. Auch ist es bekannt, in der ISDN-Telekommunikationsanlage einen Vermittlungsbaustein vorzusehen, der eine Kommunikation der angeschlossenen ISDN-Endgeräte untereinander und mit den analogen Endgeräten ermöglicht, ohne eine gebührenpflichtige Verbindung zur Vermittlungsstelle aufbauen zu müssen, was als Inhouse-Betrieb bezeichnet wird.

Die bekannten ISDN-Telekommunikationsanlagen ermöglichen somit zwar eine Vielzahl unterschiedlicher Komfort- oder Vermittlungsfunktionen, ändern jedoch nichts an dem Kernproblem, daß an einem ISDN-Basisanschluß wegen der geringen Zahl von nur zwei B-Kanälen nur zwei Endgeräte gleichzeitig eine Kommunikationsverbindung haben können.

Der Erfindung liegt somit die Aufgabe zugrunde, die Möglichkeit zu schaffen, an einer ISDN-Telekommunikationsanlage für einen internen ISDN-Basisanschluß mehr als zwei Endgeräte gleichzeitig aktiv betreiben zu können.

Die Aufgabe wird, ausgehend von einer bekannten ISDN-Telekommunikationsanlage gemäß dem Oberbegriff des Anspruchs 1, durch die im kennzeichnenden Teil des Anspruchs 1 angegebenen Merkmale bzw. - hinsichtlich einer entsprechenden Teilnehmerendeinrichtung - durch die Merkmale des Anspruchs 10 gelöst.

Die Erfindung schließt die technische Lehre ein, auf der Teilnehmerseite einer ISDN-Telekommunikationsanlage eine bitratenreduzierte Kodierung zu verwenden, um über einen B-Kanal mehrere Verbindungen aufbauen zu können, wobei die von den verschiedenen Endgeräten herrührenden Datenströme in dem B-Kanal in der ISDN-Telekommunikationsanlage separiert und in das 64 kBit/s-Übertragungsformat des ISDN-Standards umgesetzt werden, sofern der Verbindungspartner nicht selbst ein internes Endgerät mit bitratenreduzierter Kodierung ist.

Die erfindungsgemäße Teilnehmerendeinrichtung weist zum Anschluß an den internen S-Bus der erfindungsgemäßen ISDN-Telekommunikationsanlage eine S-Schnittstelle auf und verfügt über mindestens ein Endgerät, das entsprechend einem bitratenreduzierten Übertragungsstandard arbeiten. Die von dem Endgerät ausgehenden Datenströme werden dann durch ein Koppel feld in einen B-Kanal des internen S-Busses eingeschachtelt, um über einen B-Kanal mehrere Verbindungen abwickeln zu können und dadurch die effektive Übertragungskapazität der B-Kanäle zu erhöhen.

Die Bezeichnung S-Bus ist hierbei und im folgenden allgemein zu verstehen und schließt im Falle eines ISDN-Basisanschlusses einen S₀-Bus sowie bei einem Primärmultiplexanschluß einen S_{2M}-Bus ein.

In einer Variante der Erfindung weist die Teilnehmerendeinrichtung mehrere Endgeräte auf, wobei das Koppelfeld die von den Endgeräten eintreffenden Bitgruppen zu einem Byte zusammenfügt und dieses zur Übertragung über den internen S-Busses in einen B-Kanal.

In der bevorzugten Ausführungsform dieser Variante der Erfindung handelt es sich bei der Teilnehmerendeinrichtung um eine DECT-Funkbasisstation mit mehreren schnurlosen Telefonen, die jeweils entsprechend dem DECT-Übertragungsstandard ETS 300 175 mit einer Übertragungsrate von 32 kBit/s nach ITU (früher CCITT) Rec. G.726 arbeiten, wobei die Sprachdaten bei einer Abtastrate von 4 kSamples/s jeweils im 4-Bit-Format in Form von Nibbles vorliegen. Das Koppel feld in der Teilnehmerendeinrichtung setzt dann die von den schnurlosen Telefonen stammenden Nibbles jeweils paarweise zu einem Byte entsprechend dem ISDN-Übertragungsstandard zusammen.

In einer anderen Variante der Erfindung unterstützt die Teilnehmerendeinrichtung mehrere verschiedene bitratenreduzierte Übertragungsstandards und/oder zusätzlich den normalen ISDN-Übertragungsstandard gemäß der ITU-Empfehlung G.711, wobei der aktuelle Übertragungsstandard vorzugsweise von der ISDN-Telekommunikationsanlage über eine Kennung vorgegeben wird, die über den internen S-Bus zu der Teilnehmerendeinrichtung übertragen werden kann. Zur Unterstützung der verschiedenen Übertragungsraten sind vorzugsweise Transcoder vorgesehen, welche die Umsetzung in die verschiedenen Übertragungsstandards vornehmen. Das Koppelfeld in der Teilnehmerendeinrichtung koppelt die teilnehmerseitig eintreffenden Bitgruppen dann entsprechend dem aktuell eingestellten Übertragungsstandard in einen B-Kanal des internen S-Busses ein. Vorteilhaft hierbei ist, daß die Übertragungsrate an die Belastung des internen S-Busses angepaßt werden kann. So können die Teilnehmerendeinrichtungen auf eine Übertragungsrate von 16 kBit/s eingestellt werden, was den gleichzeitigen Betrieb von bis zu sechs Endgeräten an dem internen S-Bus ermöglicht. Eine Übertragungsrate von 32 kBit/s ermöglicht immer noch den gleichzeitigen Betrieb von bis zu vier Teilnehmerendeinrichtungen, während eine Übertragungsrate von 64 kBit/s den Betrieb von maximal zwei Teilnehmerendeinrichtungen zuläßt.

Das vorstehend beschriebene Koppel feld kann beispielsweise in Software auf der Hardware-Plattform des integrierten ISDN-Prozessors VNS 80000 des US-Herstellers VLSI realisiert werden, der sich hierfür besonders eignet. Es ist jedoch auch möglich, das Koppel feld mit hierfür speziell zu entwickelnden Hardwarekomponenten zu realisieren.

Gemäß der Erfindung ist weiterhin eine ISDN-Telekommunikationsanlage vorgesehen, die den Betrieb derartiger Teilnehmerendeinrichtungen mit bitratenreduzierten Kodierungen ermöglicht. Hierzu weist die erfindungsgemäße ISDN-Telekommunikationsanlage ein Koppel feld auf, in dem die von den bitratenreduziert arbeitenden Endgeräten stammenden und in Bytes zusammengefaßten Datenströme in Bitgruppen zerlegt werden. Weiterhin weist die ISDN-Telekommunikationsanlage einen Transcoder auf, der zwischen dem bitratenreduzierten Übertragungsstandard und dem ISDN-Übertragungsstandard umsetzt.

In einer vorteilhaften Variante der Erfindung ermöglicht die ISDN-Telekommunikationsanlage den Betrieb von Endgeräten mit unterschiedlichen bitratenreduzierten Übertragungsstandards. Hierzu sind in der ISDN-Telekommunikationsanlage vorzugsweise mehrere Transcoder vorgesehen, die eine Umsetzung zwischen dem ISDN-Übertragungsstandard einerseits und verschiedenen bitratenreduzierten Übertragungsstandards andererseits ermöglichen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als bevorzugtes Ausführungsbeispiel der Erfindung eine ISDN-Telekommunikationsanlage mit mehreren Teilnehmerendeinrichtungen als Blockschaltbild,
- Figur 2: die DECT-Funkbasisstation aus Figur 1 detailliert als Blockschaltbild,
- Figur 3: die ISDN-Telekommunikationsanlage aus Figur 1 detailliert als Blockschaltbild,
- Figur 4: die Rahmenstruktur der Datenübertragung auf dem internen S₀-Bus der in Figur 1 dargestellten ISDN-Telekommunikationsanlage,
- Figur 5: eines der in Figur 1 dargestellten ISDN-Endgeräte, das verschiedene Übertragungsstandards unterstützt,
- Figur 6: die Rahmenstruktur auf dem internen S₀-Bus, wenn das in Figur 5 dargestellte ISDN-Endgerät im DECT-Modus arbeitet sowie
- Figur 7: die Rahmenstruktur auf dem internen S₀-Bus bei sechs gleichzeitig aktiven Endgeräten im bitratenreduzierten Betrieb mit einer Übertragungsrate von jeweils 16 kBit/s.

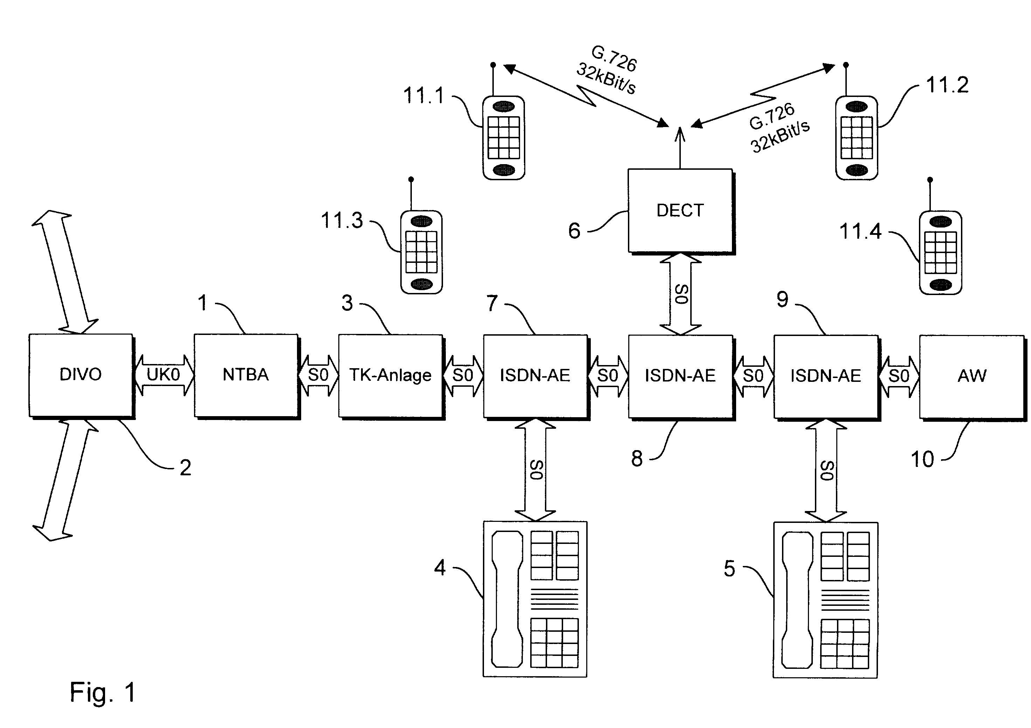

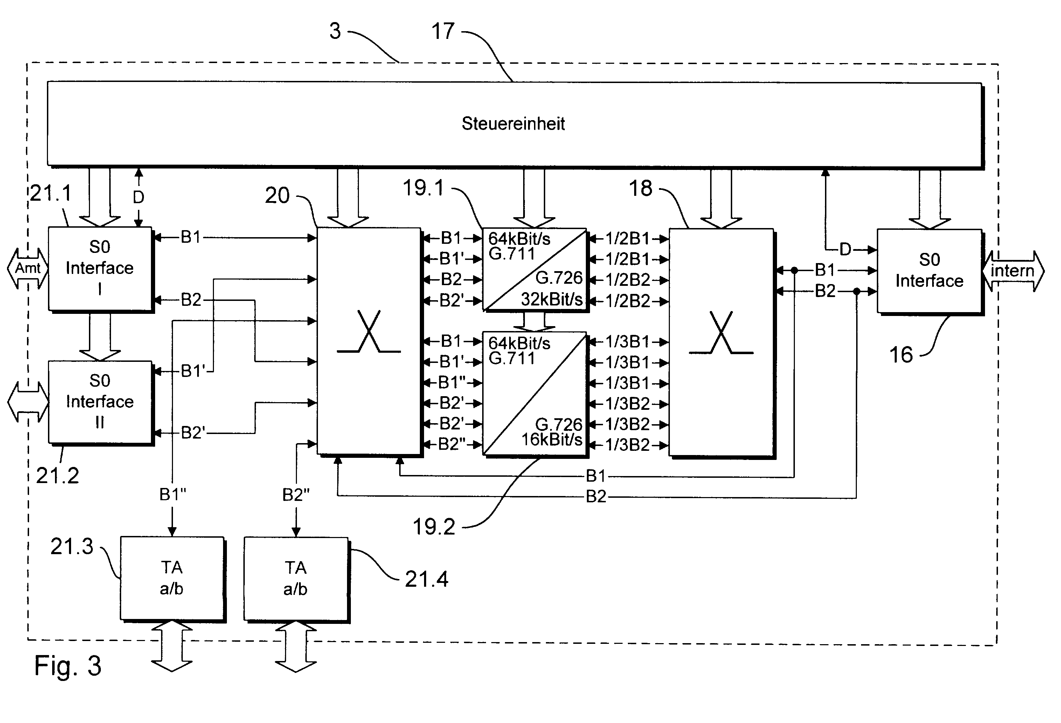

Die in Figur 1 gezeigte Anlagenkonfiguration ermöglicht den Anschluß einer Vielzahl von Endgeräten an einen ISDN-Basisanschluß, der an einem Netzabschlußgerät (NTBA - network terminator basic access) 1 bereitgestellt wird, wobei das Netzabschlußgerät 1 in den Räumen des Benutzers installiert ist und amtsseitig eine U_{K0}-Schnittstelle aufweist, die über eine herkömmliche 2-Draht-Leitung mit einer Ortsvermittlungsstelle (DIVO - Digitale Vermittlungsstelle Ortsnetz) 2 verbunden ist. Die Ortsvermittlungsstelle 2 ermöglicht den Verbindungsaufbau zu anderen Teilnehmern und ist hierzu in das öffentliche ISDN-Netz eingebunden. Teilnehmerseitig weist das Netzabschlußgerät 1 eine S₀-Schnittstelle auf, die über eine 4-Draht-Leitung mit einer erfindungsgemäßen ISDN-Telekommunikationsanlage 3 verbunden ist, die detailliert in Figur 3 dargestellt ist und noch eingehend beschrieben wird.

Zusätzlich zu der (den) amtsseitigen S₀-Schnittstelle(n) weist die ISDN-Telekommunikationsanlage 3 mindestens eine weitere So-Schnittstelle auf, die einen internen S₀-Bus bereitstellt und teilnehmerseitig den Anschluß der einzelnen Teilnehmerendeinrichtungen 4, 5, 6 ermöglicht. Hierzu sind in den Räumen des Benutzers mehrere ISDN-Anschlußeinheiten (ISDN-AE) 7, 8, 9 verteilt angeordnet, die jeweils den Anschluß einer Teilnehmerendeinrichtung 4, 5 bzw. 6 ermöglichen und an den internen So-Bus angeschlossen sind, wobei der interne S₀-Bus durch die einzelnen ISDN-Anschlußeinheiten 7, 8, 9 durchgeschleift ist und an seinem Ende mit einem Abschlußwiderstand 10 verbunden ist, der Leitungsreflexionen auf dem internen S₀-Bus verhindert.

Bei der Teilnehmerendeinrichtung 4 handelt es sich um ein herkömmliches ISDN-Telefon, das mit einer Datenübertragungsrate von 64 kBit/s entsprechend ITU (früher CCITT) Rec. G.711 arbeitet und somit ausschließlich den ISDN-Übertragungsstandard unterstützt.

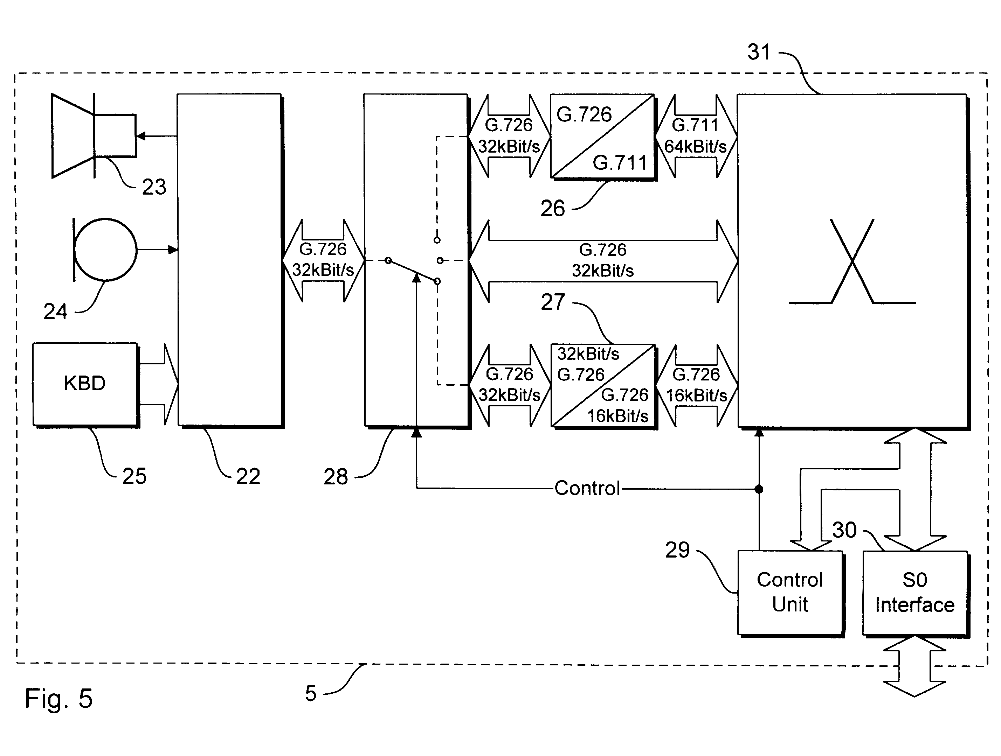

Die Teilnehmerendeinrichtung 5 ist ebenfalls ein Telefon, dessen Aufbau detailliert in der Beschreibung zu Figur 5 erläutert ist und sich von der Teilnehmerendeinrichtung 4 durch die Unterstützung weiterer Übertragungsstandards unterscheidet. So ermöglicht die Teilnehmerendeinrichtung 5 neben der ISDN-üblichen Übertragungsrate von 64 kBit/s gemäß ITU Rec. G.711 auch die für DECT-Systeme übliche Übertragungsrate von 32 kBit/s entsprechend ITU Rec. G.726 sowie einen Übertragungsstandard mit einer Übertragungsrate von nur 16 kBit/s entsprechend ITU Rec. G.726, dessen Nutzung jedoch zu einer verringerten Übertragungsqualität führt.

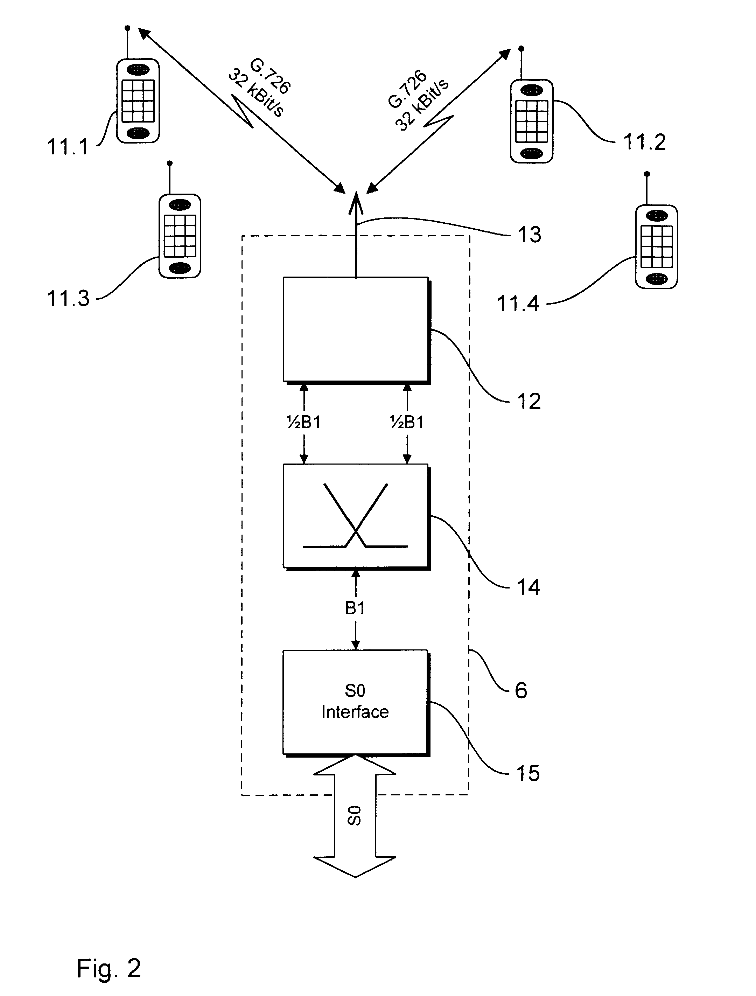

Weiterhin ist als Teilnehmerendeinrichtung eine DECT-Funkbasisstation 6 mit vier schnurlosen Telefonen 11.1 bis 11.4 angeschlossen, die detailliert in Figur 2 dargestellt ist und einen gleichzeitigen Betrieb von zwei der schnurlosen Telefone 11.1 bis 11.4 ermöglicht. Hierzu weist die DECT-Funkbasisstation 6 eine herkömmliche DECT-Sende-/Empfangsstation 12 auf, die mit einer Antenne 13 verbunden ist und eine Kommunikation mit den schnurlosen Telefonen 11.1 bis 11.4 entsprechend dem von der ETSI festgelegten Übertragungsstandard ETS 300175 ermöglicht, der eine Datenübertragungsrate von 32 kBit/s nach ITU (früher CCITT) Rec. G.726 vorsieht. Da für die ISDN-Übertragung im öffentlichen ISDN-Netz der Übertragungsstandard G.711 mit einer Datenübertragungsrate von 64 kBit/s vorgeschrieben ist, kann die DECT-Sende/Empfangsstation 12 nicht direkt an den So-Bus angeschlossen werden. Zur Anpassung der verschiedenen Übertragungsstandards weist die erfindungsgemäße DECT-Funkbasisstation 6 deshalb ein Koppelfeld 14 auf, das mit der DECT-Sende/Empfangsstation 12 verbunden ist und von dieser die Datenströme von den jeweils aktiven schnurlosen Telefonen 11.1, 11.2 erhält, die entsprechend dem Übertragungsstandard G.726 mit einer Datenübertragungsrate von 32 kBit/s jeweils im 4-Bit-Format kodiert sind und somit einem halben B-Kanal des S₀-Buses entsprechen. Das Koppel feld 14 setzt die von den beiden aktiven schnurlosen Telefonen 11.1, 11.2 stammenden, jeweils 4-Bit langen Nibbles zu einem Byte zusammen, das dem B-Kanal-Format des ISDN-Übertragungsstandards G.711 entspricht. Die von den beiden schnurlosen Telefonen 11.1, 11.2 herrührenden Datenströme werden also über einen einzigen B-Kanal übertragen und bilden in diesem B-Kanal somit "Subchannels". Amtsseitig weist die DECT-Funkbasisstation 6 eine So-Schnittstelle 15 auf, die den Anschluß an die mit der ISDN-Telekommunikationsanlage 3 verbundene ISDN-Anschlußeinheit 8 ermöglicht.

Im folgenden wird nun die Funktionsweise der erfindungsgemäßen ISDN-Telekommunikationsanlage 3 beschrieben, die detailliert in Figur 3 dargestellt ist. Teilnehmerseitig weist die ISDN-Telekommunikationsanlage 3 eine S₀-Schnittstelle 16 auf, die den internen S₀-Bus bereitstellt und einen Anschluß der Teilnehmerendeinrichtungen 4, 5, 6 ermöglicht. Die S₀-Schnittstelle 16 hat hierbei die Aufgabe, die Datenübertragung entsprechend dem ISDN-Übertragungsstandard G.711 zu steuern, wobei die So-Schnittstelle 16 die im D-Kanal übertragenen Steuerdaten an eine Steuereinheit 17 überträgt, welche die vermittlungstechnische Datenübertragung steuert. So wertet die Steuereinheit 17 die auf dem D-Kanal eintreffenden Steuerdaten aus und ermittelt daraus, ob die auf dem B-Kanal eingehenden Daten von einem ISDN-Endgerät 4, 5 herrühren oder zwei der vorstehend beschriebenen "Subchannels" enthalten, die von den Endgeräten 11.1 bis 11.4 stammen, die mit der bitratenreduzierten Kodierung G.726 arbeiten.

Sowohl die Steuereinheit 17 wie auch die in Figur 2 dargestellte DECT-Funkbasisstation 6 verfügen über abgestimmte proprietäre Erweiterungen des standardisierten DSS1-Protokolls, um das Handling von Endgeräten mit "Subchanneling" abwickeln zu können.

Die teilnehmerseitig eingehenden B-Kanal-Daten werden dann einem Koppelfeld 18 zugeführt, das die einzelnen Bytes im B-Kanal jeweils in vier Bit lange Nibbles zerlegt, so daß die beiden B-Kanäle von dem Koppelfeld 18 in vier "Subchannels" aufgeteilt werden, die entsprechend dem DECT-Übertragungsstandard nach G.726 kodiert sind. Nachfolgend werden die vier "Subchannels" dann von einem Transcoder 19.1 von der DECT-Übertragungsrate nach G.726 in die ISDN-Übertragungsrate nach G.711 umgesetzt. Am amtsseitigen Anschluß des Transcoders 19.1 erscheinen also vier B-Kanäle B1, B1', B2, B2' entsprechend der ISDN-Übertragungsrate nach G.711, die einem weiteren Koppel feld 20 zugeführt werden, das die B-Kanäle an zwei mit dem Netzabschlußgerät 1 verbundene S₀-Schnittstellen 21.1, 21.2 oder an zwei Terminaladapter a/b 21.3, 21.4 vermittelt, wobei letztere einen Anschluß von analogen Endgeräten ermöglichen.

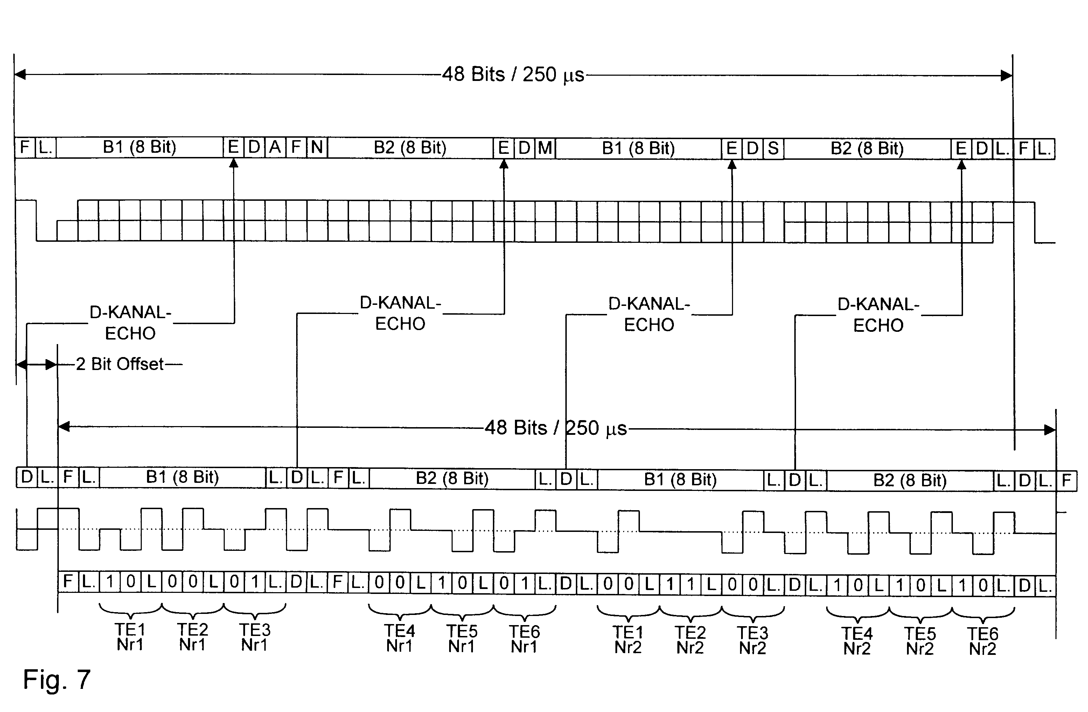

Neben dem normalen ISDN-Betrieb mit einer Übertragungsrate von 64 kBit/s und dem vorstehend beschriebenen Betrieb von Endgeräten mit einer Übertragungsrate von 32 kBit/s entsprechend dem DECT-Standard ermöglicht die Telekommunikationsanlage 3 auch den Betrieb von Endgeräten, die mit einer Übertragungsrate von 16 kBit/s gemäß ITU-Rec. G.726 arbeiten. In diesem Fall enthält jeder B-Kanal des internen S₀-Busses zusammen mit einem nachfolgenden Zusatzbit jeweils drei Datentripel, die innerhalb der ISDN-Rahmenstruktur "Subchannels" bilden, so daß an dem internen S₀-Bus insgesamt sechs Endgeräte gleichzeitig betrieben werden können. Das Koppel feld 18 separiert in diesem Fall die Datentripel aus den einzelnen ISDN-Bitrahmen und führt die insgesamt sechs "Subchannels" dann einem Transcoder 19.2 zu, der von der Übertragungsrate von 16 kBit/s gemäß ITU-Rec. G.726 in die ISDN-Übertragungsrate von 64 kBit/s gemäß ITU-Rec. G.711 umsetzt, so daß am amtsseitigen Anschluß des Transcoders 19.2 sechs B-Kanäle B1, B1', B1", B2, B2' und B2" erscheinen, die ebenfalls dem Koppel feld 20 zugeführt werden. Das Koppelfeld 20 vermittelt die vier bzw. sechs teilnehmerseitig vorliegenden B-Kanäle an die beiden S₀-Schnittstellen 21.1, 21.2 bzw. an die beiden Terminaladapter a/b 21.3, 21.4, die den Anschluß herkömmlicher analoger Endgeräte ermöglichen. Diese Betriebsart der Telekommunikationsanlage wird nachfolgend noch detailliert anhand der Beschreibung zu Figur 7 erläutert.

Falls die an der So-Schnittstelle 16 eingehenden B-Kanal-Daten von einem der schnurlosen Telefone 11.1 bis 11.4 stammen und demzufolge zwei "Subchannels" enthalten wählt das Koppel feld 20 die zugehörigen B-Kanäle am amtsseitigen Anschluß des Transcoders 19.1 aus und leitet diese der (den) S₀-Schnittstelle(n) 21.1 bzw. 21.2 oder anderen internen Teilnehmerschnittstellen, die im G.711-Format arbeiten, zu.

Stammen die an der So-Schnittstelle 16 eingehenden B-Kanal-Daten dagegen von dem ISDN-Endgerät 4, so werden die Transcoder 19.1, 19.2 umgangen und des Koppelfeld 20 wählt die direkt von der S₀-Schnittstelle 16 kommenden B-Kanäle aus und leitet diese an die S₀-Schnittstelle 21.1 bzw. 21.2 weiter.

Die vorstehende Beschreibung betrifft einen Verbindungsaufbau, der von einem der angeschlossenen Endgeräte 11.1 bis 11.4 bzw. 4, 5 ausgeht. Bei einem eingehenden Anruf prüft die Steuereinheit 17 dagegen anhand der von der S₀-Schnittstelle 21.1 gelieferten D-Kanal-Daten, ob eines der ISDN-Endgeräte 4, 5 oder eines der schnurlosen Telefone 11.1 bis 11.4 angesprochen werden soll.

Bei einer Adressierung eines der ISDN-Endgeräte 4, 5 leitet das Koppel feld 20 die B-Kanal-Daten direkt an die teilnehmerseitige S₀-Schnittstelle 16 weiter, so daß die Transcoder 19.1, 19.2 umgangen werden.

Wird dagegen eines der schnurlosen Telefone 11.1 bis 11.4 angesprochen, so werden die an der So-Schnittstelle 21.1 eingehenden B-Kanal-Daten von dem Koppel feld 20 dem Transcoder 19.1 zugeführt, der den Datenstrom von der ISDN-Übertragungsrate nach G.711 in die DECT-Übertragungsrate von 32 kBit/s nach G.726 umsetzt. Anschließend fügt das Koppelfeld 18 die jeweils vier Bit langen Nibbles paarweise zu einem Byte zusammen, um eine Übertragung über den internen So-Bus zu ermöglichen. Bei ungerader Anzahl von aktiven schnurlosen Telefonen 11.1 bis 11.4 wird das freie Nibble hierbei durch Leerinformationen aufgefüllt, während das Koppel feld 18 bei zwei oder vier aktiven schnurlosen Telefonen 11.1 bis 11.4 die zugehörigen Nibbles zu einem oder zwei Byte(s) zusammenfaßt.

Die dargestellte erfindungsgemäße Anlagenkonfiguration ermöglicht an einem internen ISDN-Basisanschluß somit wahlweise einen reinen ISDN-Betrieb mit maximal zwei gleichzeitig arbeitenden ISDN-Endgeräten 4, 5 auf jeweils einem B-Kanal oder einen gemischten Betrieb mit zwei schnurlosen Telefonen 11.1, 11.2 zusammen auf dem einen B-Kanal und einem ISDN-Endgerät 4 bzw. 5 auf dem anderen B-Kanal oder einen reinen bitratenreduzierten Betrieb mit maximal vier gleichzeitig im Inhouse-Betrieb arbeitenden schnurlosen Telefonen 11.1 bis 11.4, wobei jeweils zwei der schnurlosen Telefon 11.1 bis 11.4 auf einem B-Kanal zusammengefaßt werden. Darüber hinaus ist auch der Betrieb von bis zu sechs Endgeräten mit einer Übertragungsrate von 16 kBit/s gemäß ITU-Rec. G.726 möglich, wie nachfolgend anhand der Beschreibung zu Figur 7 erläutert wird.

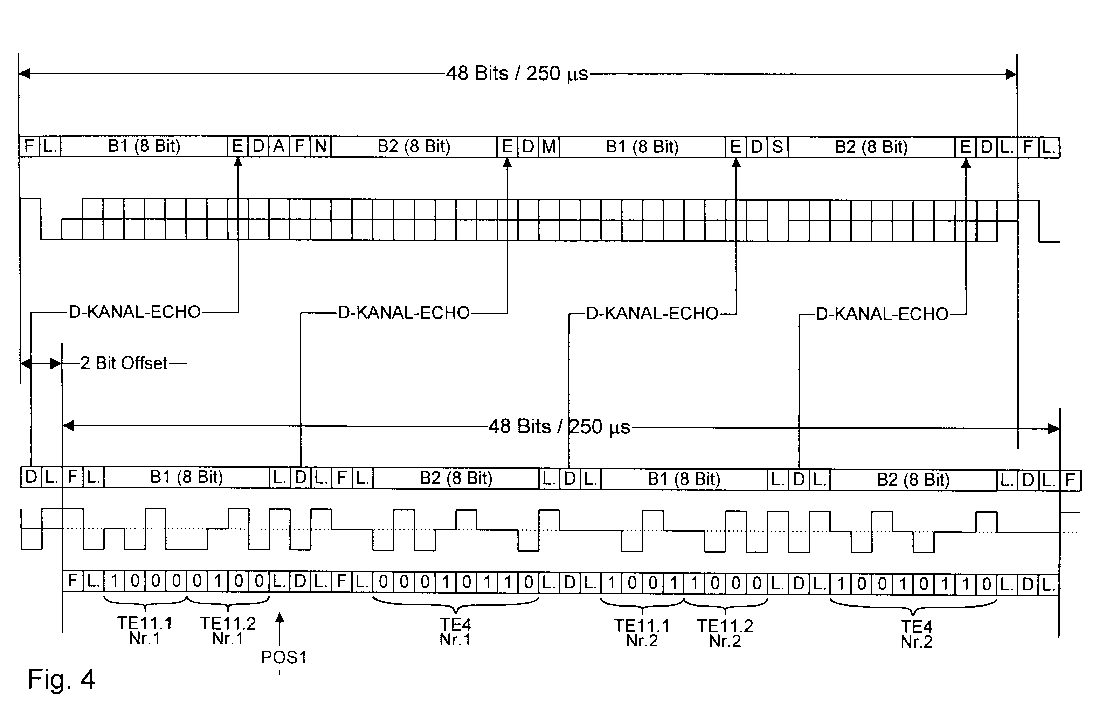

Figur 4 zeigt die Rahmenstruktur der Datenübertragung auf dem internen So-Bus der ISDN-Telekommunikationsanlage 3 ge-mäß ITU Rec. 430, wenn sowohl die DECT-Funkbasisstation 6 mit den schnurlosen Telefonen 11.1 und 11.2 sowie das herkömmliche ISDN-Telefon 4 aktiv sind. Im oberen Bereich von Figur 4 ist ein Rahmen bei einer Übertragung von der ISDN-Telekommunikationsanlage 3 zu den Teilnehmerendeinrichtungen 4, 5, 6 dargestellt ist, während im unteren Bereich von Figur 4 ein Rahmen bei einer Übertragung von den Teilnehmerendeinrichtungen 4, 5, 6 zu der ISDN-Telekommunikationsanlage 3 gezeigt ist.

In beiden Richtungen beträgt die Datenübertragungsrate auf dem internen S₀-Bus 192 kBit/s, wobei die Rahmen eine Länge von jeweils 48 Bit bzw. 250 µs aufweisen. Die Kodierung einer logischen "0" erfolgt abwechselnd durch Impulse mit positiver und negativer Impulspolarität, um das übertragene Signal möglichst gleichspannungsfrei zu halten, wohingegen eine logische "1" durch einen Ruhepuls (Spannung=Null) wiedergegeben wird.

Im folgenden wird zunächst der Rahmenaufbau bei einer Datenübertragung von den Teilnehmerendeinrichtungen 4, 5, 6 zu der ISDN-Telekommunikationsanlage 3 beschrieben. In diesem Fall steht am Beginn eines Rahmens zunächst ein Rahmenbit F (Framing Bit) mit logisch "0" und positiver Impulspolarität, gefolgt von einem Gleichspannungs-Ausgleichs-Bit L. (D.C.-Balancing Bit) mit ebenfalls logisch "0", jedoch negativer Impulspolarität.

Anschließend folgen die acht Datenbits des B1-Kanals, wobei das erste Nibble (4 Bit) von dem schnurlosen Telefon 11.1 (TE11.1) stammt, wohingegen das zweite Nibble von dem anderen schnurlosen Telefon 11.2 (TE11.2) erzeugt wurde. Jedes der beiden schnurlosen Telefone 11.1, 11.2 kodiert die erste logische "0" eines Nibbles mit einer negativen Impulspolarität und jede folgende logische "0" desselben Nibbles abwechselnd mit positiver und negativer Impulspolarität, um das über den S₀-Bus übertragene Signal möglichst gleichspannungsfrei zu halten.

Nach den acht Bits des B1-Kanals folgt ein weiteres Gleichspannungs-Ausgleichs-Bit L. (D.C.-Balancing-Bit), das einen eventuell auftretenden Gleichspannungsanteil des B1-Kanals kompensieren soll. Das Gleichspannungs-Ausgleichs-Bit L. wird deshalb von dem schnurlosen Telefon 11.1 oder 11.2 auf eine logische "0" mit positiver Impulspolarität gesetzt, wenn in dem zugehörigen Nibble einmal oder dreimal eine logische "0" vorhanden ist, da das Nibble in diesem Fall einen Gleichspannungsanteil enthält.

Die Kompensation des Gleichspannungsanteils ist jedoch dann leicht gestört, wenn beiden Nibbles des B1-Kanals eine ungerade Zahl von logischen Nullen enthalten, da dann zwei Überhangimpulse mit negativer Impulspolarität vorhanden sind, von denen nur einer durch das nachfolgende Gleichspannungs-Ausgleichs-Bit L. kompensiert werden kann, wie in Position 1 (POS1) dargestellt ist. Dies ist möglich, da jedes der schnurlosen Telefone 11.1, 11.2 die erste logische Null in dem zugehörigen Nibble unabhängig von dem Inhalt des anderen Nibbles mit einer negativen Impulspolarität kodiert. Die Auftrittswahrscheinlichkeit für ein derartiges Ereignis ist jedoch lediglich 25%, so daß bei einem mit vier aktiven Endgeräten belegten S₀-Bus im Mittel nur eines von 48 Bits gleichspannungsmäßig nicht kompensiert ist. Dies entspricht im Busbetrieb einem zusätzlichen Gleichspannungs-Offset von rund 2%, was aber angesichts der ohnehin vorhandenen Ungenauigkeiten der symmetrischen Bustreiber von rund 5% keine besonderen Einschränkungen zur Folge hat. Gegebenenfalls kann dieser Gleichspannungs-Offset auch mit einer höheren Genauigkeit der Spannungsversorgung und der Leitungstreiber in den Endgeräten kompensiert werden. Enthält dagegen nur ein Nibble des B1-Kanals eine ungerade Zahl von logischen Nullen, so führt die ODER-Verknüpfung bei der Generierung des Gleichspannungs-Ausgleichs-Bits L. zu einer vollständigen Kompensation des Gleichspannungsanteils im B1-Kanal.

Anschließend folgt dann ein D-Kanal-Bit D, wobei eine logische "0" des D-Kanal-Bits mit negativer Impulspolarität kodiert wird. In diesem Fall enthält das anschließende Gleichspannungs-Ausgleichs-Bit L. eine logische "0" mit positiver Impulspolarität.

Nach dem D-Kanal-Bit D mit dem zugehörigen Gleichspannungs-Ausgleichs-Bit L. wird dann ein Rahmenbit F mit einem zugehörigen Gleichspannungs-Ausgleichs-Bit übertragen. Sowohl das Rahmenbit F als auch das Gleichspannungs-Ausgleichs-Bit L. werden von dem zugehörigen Endgerät auf eine logische "0" mit negativer Impulspolarität gesetzt, um der ISDN-Telekommunikationsanlage 3 eine erfolgreiche Aufsynchronisierung auf den ISDN-Rahmen anzuzeigen.

Als nächstes werden dann die acht Bits des B2-Kanals übertragen, die von dem herkömmlichen ISDN-Endgerät 4 (TE4) erzeugt wurden, wobei das ISDN-Endgerät 4 die erste logische "0" innerhalb des B2-Kanal-Bytes mit einer negativen Impulspolarität und alle folgenden logischen Nullen innerhalb des gesamten B2-Kanal-Bytes abwechselnd mit positiver und negativer Impulspolarität kodiert, so daß ein eventuell vorhandener Gleichspannungsanteil durch das folgende Gleichspannungs-Ausgleichs-Bit L. vollständig kompensiert werden kann.

Innerhalb des ISDN-Rahmens folgt dann das nächste B1-Kanal-Byte mit zwei Nibbles der beiden schnurlosen Telefone 11.1, 11.2 (TE11.1, TE11.2), gefolgt von einem Gleichspannungs-Ausgleichs-Bit L. und einem D-Kanal-Bit mit dem zugehörigen Gleichspannungs-Ausgleichs-Bit L..

Am Schluß des ISDN-Rahmens steht dann schließlich das nächste B2-Kanal-Byte mit einem nachfolgenden Gleichspannungs-Ausgleichs-Bit L. sowie ein D-Kanal-Bit mit dem zugehörigen Gleichspannungs-Ausgleichs-Bit.

Im oberen Bereich von Figur 4 ist dagegen ein ISDN-Rahmen bei einer Übertragung von den Teilnehmerendeinrichtungen 4, 5, 6 zu der ISDN-Telekommunikationsanlage 3 dargestellt, der gegenüber dem im unteren Bereich von Figur 3 dargestellten ISDN-Rahmen um 2 Bit versetzt übertragen wird und einen geringfügig anderen Aufbau aufweist. So verfügt der im oberen Bereich von Figur 4 dargestellte ISDN-Rahmen über ein Aktivierungsbit A (Activation Bit), ein Mehrrahmenbit M (Multiframing Bit), ein D-Kanal-Echo-Bit E sowie ein für Studienzwecke vorgesehenes Bit S. Das D-Kanal-Echo-Bit E gibt hierbei den Inhalt des zuvor von den Endgeräten zu der ISDN-Telekommunikationsanlage 3 übertragenen D-Kanal-Bits D wieder, was durch die Pfeile von dem unteren Rahmen zu dem oberen Rahmen angedeutet wird.

Figur 5 zeigt den Aufbau des in Figur 1 dargestellten ISDN-Telefons 5, das - wie bereits vorstehend erwähnt - neben dem ISDN-Übertragungsstandard mit einer Übertragungsrate von 64 kBit/s entsprechend ITU-Rec. G.711 auch Übertragungsraten von 32 kBit/s entsprechend dem DECT-Standard ITU Rec. G.726 sowie 16 kBit/s unterstützt.

Als Kern weist das Telefon 5 einen herkömmlichen Telefonbaustein 22 auf, der nach dem DECT-Standard G.726 mit einer Übertragungsrate von 32 kBit/s arbeitet und mit einem Lautsprecher 23, einem Mikrofon 24 sowie einem Tastenfeld 25 zur Bedienung verbunden ist. Die Umwandlung in die anderen Übertragungsstandards mit Übertragungsraten von 64 kBit/s entsprechend ITU-Rec. G.711 bzw. 16 kBit/s entsprechend ITU-Rec. G.726 erfolgt durch zwei Transcoder 26, 27, die mit dem Telefonbaustein 22 durch eine Signalweiche 28 verbunden sind, deren Stellung die Betriebsart des Telefons 5 bestimmt. Die Ansteuerung der Signalweiche 28 zur Einstellung der gewünschten Betriebsart erfolgt durch eine Steuereinheit 29, die eingangsseitig mit einer S₀-Schnittstelle 30 verbunden ist, über die das Telefon 5 an eine der ISDN-Anschlußeinheiten 7, 8, 9 angeschlossen werden kann. Die Steuereinheit 29 überwacht laufend den D-Kanal des internen S₀-Busses und überprüft, ob die ISDN-Telekommunikationsanlage 3 eine Kennung überträgt, welche die gewünschte Betriebsart bestimmt. In diesem Fall gibt die Steuereinheit 29 ein entsprechendes Signal an die Signalweiche 28, woraufhin der Telefonbaustein 22 mit dem zugehörigen Transcoder 26 oder 27 verbunden oder direkt auf ein Koppelfeld 31 durchgeschaltet wird.

Das Koppel feld 31 hat zum einen die Aufgabe, die von dem Telefonbaustein 22 kommenden Daten in die bereits vorstehend beschriebene ISDN-Rahmenstruktur einzukoppeln. Zum anderen zerlegt das Koppelfeld 31 bei teilnehmerseitig eingehenden Daten die einzelnen ISDN-Rahmen und separiert die für den Telefonbaustein 22 bestimmten Daten, die dann isoliert dem Telefonbaustein 22 zugeführt werden.

Im folgenden wird die Funktionsweise des Telefons 5 zunächst in der Betriebsart mit dem Übertragungsstandard entsprechend ITU-Rec. G.711 mit einer Übertragungsrate von 64 kBit/s beschrieben. In diesem Fall werden die von dem Telefonbaustein 22 ausgehenden Datenströme von der Signalweiche 28 auf den Transcoder 26 geführt, der die Datenströme in den ISDN-Übertragungsstandard entsprechend ITU-Rec. G.711 mit einer Übertragungsrate von 64 kBit/s transformiert. Die derart transformierten Datenströme werden dann dem Koppelfeld 31 zugeführt, das die einzelnen Bytes in den B1-Kanal oder in den B2-Kanal des internen S₀-Busses einkoppelt, wobei die Wahl des B-Kanals von der ISDN-Telekommunikationsanlage 3 vorgegeben und von der Steuereinheit 29 eingestellt wird.

Arbeitet das Telefon 5 dagegen in dem DECT-Übertragungsstandard gemäß ITU-Rec. G.726 mit einer Übertragungsrate von 32 kBit/s, so werden die von dem Telefonbaustein 22 ausgehenden Datenströme direkt dem Koppel feld 31 zugeführt, das die einzelnen Nibbles in den B1-Kanal oder den B2-Kanal des internen S₀-Busses einkoppelt. Die ISDN-Telekommunikationsanlage 3 gibt hierbei durch eine entsprechende Kennung vor, in welchen B-Kanal das Telefon 5 die Daten einkoppelt und welche Stellung die Nibbles innerhalb der ISDN-Rahmenstruktur einnehmen.

Falls das Telefon 5 dagegen mit einer Übertragungsrate von 16 kBit/s entsprechend dem Übertragungsstandard ITU-Rec. G.726 arbeitet, so werden die von dem Telefonbaustein 22 kommenden Daten dem Transcoder 27 zugeführt, der von der Übertragungsrate 32 kBit/s in die gewünschte Übertragungsrate von 16 kBit/s umsetzt. Anschließend werden die auf diese Weise umgesetzten Datenströme dann dem Koppel feld 31 zugeführt, das die einzelnen Datentripel in die ISDN-Rahmenstruktur einkoppelt, wobei die Steuereinheit 29 entsprechend einer von der ISDN-Telekommunikationsanlage 3 empfangenen Kennung vorgibt, in welchen B-Kanal und an welcher Stelle innerhalb des B-Kanals die Datentripel eingekoppelt werden.

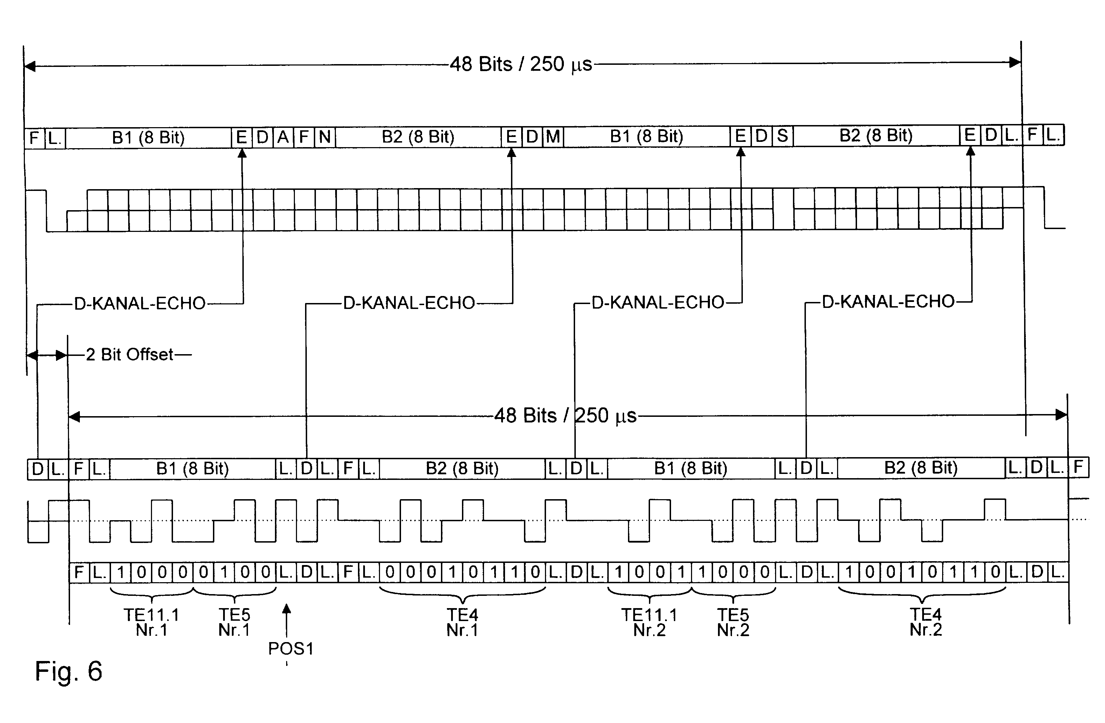

Figur 6 zeigt die Rahmenstruktur für die Datenübertragung auf dem internen S₀-Bus, wenn das Telefon 5 im DECT-Modus entsprechend ITU-Rec. G.726 mit einer Übertragungsrate von 32 kBit/s arbeitet und zusätzlich das schnurlose Telefon 11.1 sowie das herkömmliche ISDN-Telefon 4 aktiv sind. In diesem Fall belegen die Nibbles des schnurlosen Telefons 11.1 (TE11.1) jeweils das erste Nibble in den Bytes des B1-Kanals, während des zweite Nibble in den Bytes des B1-Kanals jeweils von dem im DECT-Modus arbeitenden Telefon 5 (TE5) belegt wird. Der B2-Kanal steht dann dem herkömmlichen ISDN-Telefon 4 (TE4) alleine zur Verfügung. Die einzelnen Nibbles der B-Kanäle können also nicht nur - wie in Figur 4 dargestellt - einer Teilnehmerendeinrichtung mit mehreren Endgeräten zugeteilt werden, sondern es ist auch möglich, die Nibbles eines B-Kanals direkt verschiedenen Endgeräten zuzuteilen.

Figur 7 zeigt schließlich die ISDN-Rahmenstruktur für die Datenübertragung auf dem internen S₀-Bus für den bereits vorstehend erwähnten Fall, das sechs der in Figur 5 dargestellten Telefone 5 gleichzeitig am internen So-Bus aktiv sind, wobei alle Telefone TE1, ..., TE6 mit der verminderten Übertragungsrate von 16 kBit/s gemäß ITU-Rec. G.726 arbeiten, um eine gleichzeitige Übertragung von sechs Verbindungen über den S₀-Bus zu ermöglichen.

Die von den einzelnen Endgeräten TE1, ..., TE6 ausgehenden Datenströme werden hierbei jeweils in Form von 3-Bit-Tripeln in die ISDN-Rahmenstruktur eingekoppelt, wobei in jedem Tripel jeweils nur die ersten beiden Bits informationshaltig sind, während das dritte Bit ein Gleichspannungs-Ausgleichs-Bit L. ist. Die erste logische "0" eine Tripels wird jeweils mit einer negativen Impulspolarität kodiert, während eine eventuell vorhandene zweite logische "0" mit einer positiven Impulspolarität kodiert wird, um das resultierende Signal möglichst gleichspannungsfrei zu halten. Enthält ein Tripel also zweimal eine logische "1" oder zweimal eine logische "0", so sind die beiden informationshaltigen Bits des Tripels gleichspannungsfrei, während bei nur einer logischen "0" das Gleichspannungs-Ausgleichs-Bit L. auf logisch "0" mit einer positiven Impulspolarität gesetzt werden muß, um das Signal gleichspannungsfrei zu halten.

Das erste Tripel des ersten Endgeräts TE1, nimmt die ersten drei Bits des B1-Kanals ein, während die Bits vier bis sechs des B1-Kanals von dem ersten Tripel des zweiten Endgeräts TE2 belegt werden. Das dritte Endgerät TE3 belegt dann mit seinem ersten Tripel die Bits sieben und acht des B1-Kanals sowie das Gleichspannungs-Ausgleichs-Bit L.. Jeder B-Kanal wird also um das zugehörige Gleichspannungs-Ausgleichs-Bit ergänzt und enthält jeweils drei Tripel, wobei die Einordnung der einzelnen Tripel in die ISDN-Rahmenstruktur von der ISDN-Telekommunikationsanlage 3 durch eine Kennung vorgegeben wird. Auf diese Weise lassen sich über einen So-Bus sechs Verbindungen mit einer verminderten Datenübertragungsrate von 16 kBit/s abwickeln, was zumindest im Inhouse-Betrieb für eine Verständigung ausreicht.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. ISDN-Telekommunikationsanlage (3) mit mindestens einer amtsseitigen S-Schnittstelle (21.1) zum Anschluß an ein Netzabschlußgerät (1) oder mit einer amtsseitigen U-Schnittstelle zum direkten Anschluß an eine digitale Vermittlungsstelle (2) sowie mit mindestens einer teilnehmerseitigen S-Schnittstelle (16) zur Bereitstellung eines internen S-Busses und zum Anschluß von ISDN-Endgeräten (4, 5) an den internen S-Bus,
**dadurch gekennzeichnet,**
daß der amtsseitigen S- bzw. U-Schnittstelle (21.1) und der teilnehmerseitigen S-Schnittstelle (16) ein erstes Koppelfeld (18) zwischengeschaltet ist, das die auf einem B-Kanal des internen S-Busses teilnehmerseitig eintreffenden Bytes jeweils in mehrere Bitgruppen zerlegt, die jeweils entsprechend einem bitratenreduzierten Übertragungsstandard von einem digitalen Endgerät (11.1 bis 11.4) stammen,
daß der amtsseitigen S- bzw. U-Schnittstelle (21.1) und dem ersten Koppelfeld (18) ein Transcoder (19.1) zwischengeschaltet ist, der amtsseitig einen ISDN-Übertragungsstandard und teilnehmerseitig den bitratenreduzierten Übertragungsstandard des digitalen Endgeräts (11.1 bis 11.4) unterstützt.

2. ISDN-Telekommunikationsanlage (3) nach Anspruch 1, **dadurch gekennzeichnet**, daß dem Transcoder (19.1) und der amtsseitigen S-Schnittstelle (21.1) ein mit der teilnehmerseitigen S-Schnittstelle (16) verbundenes zweites Koppelfeld (20) zwischengeschaltet ist, welches die amtsseitigen B-Kanäle wahlweise mit der teilnehmerseitigen S-Schnittstelle (16) oder dem Transcoder (19.1) verbindet.

3. ISDN-Telekommunikationsanlage (3) nach Anspruch 2, **dadurch gekennzeichnet**, daß zur Steuerung des ersten und/oder zweiten Koppelfeldes (18, 20) eine Steuereinheit (17) vorgesehen ist, die zur Auswertung der D-Kanal-Protokoll-Daten mit der amtsseitigen S-Schnittstelle (21.1) und der teilnehmerseitigen S-Schnittstelle (16) verbunden ist.

4. ISDN-Telekommunikationsanlage (3) nach Anspruch 2 oder 3, **dadurch gekennzeichnet,** daß den beiden Koppelfeldern (18, 20) mehrere Transcoder (19.1, 19.2) zwischengeschaltet sind, die teilnehmerseitig bitratenreduzierte Übertragungsstandards mit unterschiedlichen Übertragungsraten unterstützen.

5. ISDN-Telekommunikationsanlage (3) nach Anspruch 4, **dadurch gekennzeichnet,** daß die Steuereinheit (17) zur Auswahl des teilnehmerseitig zu unterstützenden Übertragungsstandards mit den beiden Transcodern (19.1, 19.2) verbunden ist.

6. ISDN-Telekommunikationsanlage (3) nach einem der vorhergehenden Ansprüche, **dadurch gekennzeichnet**, daß das erste Koppelfeld (18) die teilnehmerseitig eintreffenden Bytes der B-Kanäle jeweils in zwei Nibbles zerlegt.

7. ISDN-Telekommunikationsanlage (3) nach einem der Ansprüche 1 bis 5, **dadurch gekennzeichnet**, daß das erste Koppelfeld (18) die teilnehmerseitig eintreffenden Bytes der B-Kanäle zusammen mit dem anschließenden Gleichspannungs-Ausgleichs-Bit in drei jeweils drei Bit lange Datentripel zerlegt.

8. ISDN-Telekommunikationsanlage (3) nach einem der vorhergehenden Ansprüche, **dadurch gekennzeichnet**, daß der bitratenreduzierte Übertragungsstandard der ITU-Empfehlung G.726 folgt.

9. ISDN-Telekommunikationsanlage (3) nach einem der vorhergehenden Ansprüche, **dadurch gekennzeichnet**, daß der ISDN-Übertragungsstandard der ITU-Empfehlung G.711 folgt.

10. Digitale Teilnehmerendeinrichtung (6) zum Anschluß an eine ISDN-Telekommunikationsanlage (3) nach einem der vorhergehenden Ansprüche,
mit mindestens einem digitalen Telekommunikations-Endgerät (11.1 bis 11.4), das entsprechend dem bitratenreduzierten Übertragungsstandard arbeitet und
mit einer S-Schnittstelle (15) zum Anschluß an den internen S-Bus der ISDN-Telekommunikationsanlage (3),
**dadurch gekennzeichnet,**
daß dem Telekommunikations-Endgerät (11.1 bis 11.4) und der S-Schnittstelle (15) ein Koppelfeld (14) zwischengeschaltet ist, das teilnehmerseitig den bitratenreduzierten Übertragungsstandard unterstützt und die teilnehmerseitig von dem Telekommunikations-Endgerät (11.1 bis 11.4) eintreffenden Bitgruppen in einen B-Kanal des internen S-Busses einkoppelt und zur Übertragung über den internen S-Busses an die S-Schnittstelle (15) weitergibt.

11. Teilnehmerendeinrichtung (6) nach Anspruch 10, **dadurch gekennzeichnet**, daß mehrere Telekommunikations-Endgeräte (11.1 bis 11.4) vorgesehen sind, wobei das Koppelfeld (14) die teilnehmerseitig von den Telekommunikations-Endgeräten (11.1 bis 11.4) eintreffenden Bitgruppen zu einem Byte zusammenfügt und dieses zur Übertragung über einen B-Kanal des internen S-Busses an die S-Schnittstelle (15) weitergibt.

12. Teilnehmerendeinrichtung (6) nach Anspruch 11, **gekennzeichnet durch** die Ausbildung als DECT-Funkbasisstation (6), wobei die Telekommunikations-Endgeräte Mobilteile (11.1 bis 11.4) der DECT-Funkbasisstation (6) sind und der bitratenreduzierte Übertragungsstandard der ITU-Empfehlung G.726 folgt.

13. Teilnehmerendeinrichtung (5) nach einem der Ansprüche 10 bis 12, **dadurch gekennzeichnet,** daß dem Koppelfeld (31) zur Umsetzung der teilnehmerseitig eintreffenden Daten in einen Übertragungsstandard mit einer anderen Übertragungsrate teilnehmerseitig ein Transcoder (26, 27) vorgeschaltet ist, wobei das Koppelfeld (31) zur Auswahl der gewünschten Übertragungsrate steuerbar ist.

14. Teilnehmerendeinrichtung (5) nach Anspruch 13, **dadurch gekennzeichnet,** daß zur Auswahl der gewünschten Übertragungsrate eine mit der S-Schnittstelle (30) verbundene Steuereinheit (29) vorgesehen ist, die beim Empfang einer vorgegebenen Kennung über den internen S-Bus die zugehörige Übertragungsrate einstellt.
